# EUROPEAN PATENT APPLICATION

(11) **EP 1 574 135 A1**
(43) Date of publication of application: **14.09.2005**
(21) Application number: 05394010.2
(22) Date of filing: 08.03.2005
(51) Int. Cl.: A23B 7/10, A23B 7/157, A23B 7/158, A23B 7/02

(54) **Method for preserving fruits vegetables and mushrooms**

(30) Priority: 12.03.2004 US 798349
(71) Applicant: Giorgio Foods, Inc, Pennsylvania 19560 (US)
(72) Inventor: Liu, Xiangrong, Birdsboro Pennsylvania 19508 (US); Laudan, Krystyna, Fleetwood Pennsylvania 19522 (US)
(74) Representative: Duffy, Assumpta Dympna

(57) **Abstract**

A method for preserving fruits, vegetables or mushrooms, comprising: (a) contacting the fruits, vegetables or mushrooms with a first aqueous solution comprising a pH-adjusting agent effective to adjust the pH of the first aqueous solution to about 1.5 to 4.5, wherein the contact between the fruits, vegetables or mushrooms and the first aqueous solution is effective to reduce a microbial concentration on the fruits, vegetables or mushrooms, and (b) contacting the fruits, vegetables or mushrooms with a second aqueous solution comprising a chelating agent and an antioxidant, wherein the second aqueous solution has a pH of about 7.0 to 9.0, wherein the fruits, vegetables or mushrooms are contacted with the second aqueous solution after being contacted with the first aqueous solution.

## Description

### FIELD OF THE INVENTION

The present invention relates to methods for preserving fruits, vegetables and mushrooms. The methods can be capable of reducing the microbial concentration of the fruits, vegetables and mushrooms while substantially maintaining the appearance, texture and flavor of same. The present invention can be particularly applicable to the preservation of mushrooms.

### BACKGROUND

It can be desirable to provide fruits, vegetables and mushrooms which have a reduced concentration of microbes on the surfaces thereof. It can also be desirable for a microbe-reducing process to reduce or avoid any significantly adverse effect on the appearance, texture and flavor of the fruits, vegetables and mushrooms.

In determining the quality of fresh mushrooms, consumers typically consider a clean and light-colored appearance of the mushrooms to be a sign of good quality. In addition, the texture and flavor of the mushrooms are typically considered as being significant factors in determining the quality of the mushrooms.

Mushrooms are typically grown and harvested under conditions which enable microbes to grow on the surfaces thereof. If the microbes are not at least partially removed after harvesting, such microbes can adversely affect the appearance, texture and/or flavor of the mushrooms. Accordingly, various techniques have been used to reduce microbes from the mushrooms.

For example, a high-pH solution having a pH of about 9.5 or higher has been proposed for use as an antimicrobial wash. See, e.g., U.S. Patent Nos. 5,919,507 and 6,500,476. However, use of such high-pH solutions typically does not consistently yield whole mushrooms having an acceptable appearance after later stages of storage.

Accordingly, it can be desirable to provide a method for preserving fruits, vegetables and mushrooms which is effective to reduce the microbial concentration on the fruits, vegetables and mushrooms while substantially maintaining the appearance, texture and flavor thereof. For example, it can be desirable to provide a method for preserving mushrooms which can yield mushrooms having an extended shelf-life by reducing the microbial concentration thereon, while maintaining an acceptable appearance, texture and flavor.

### SUMMARY

According to one aspect, a method for preserving fruits, vegetables or mushrooms is provided. The method comprises:
(a) contacting the fruits, vegetables or mushrooms with a first aqueous solution comprising a pH-adjusting agent effective to adjust the pH of the first aqueous solution to about 1.5 to 4.5, wherein the contact between the fruits, vegetables or mushrooms and the first aqueous solution is effective to reduce a microbial concentration on the fruits, vegetables or mushrooms, and
(b) contacting the fruits, vegetables or mushrooms with a second aqueous solution comprising a chelating agent and an antioxidant, wherein the second aqueous solution has a pH of about 7.0 to 9.0,
wherein the fruits, vegetables or mushrooms are contacted with the second aqueous solution after being contacted with the first aqueous solution.

According to another aspect, a method for preserving fruits, vegetables or mushrooms is provided. The method comprises:
(a) contacting the fruits, vegetables or mushrooms with a first aqueous solution comprising a pH-adjusting agent effective to adjust the pH of the first aqueous solution to about 1.5 to 4.5, wherein the contact between the fruits, vegetables or mushrooms and the first aqueous solution is effective to reduce a microbial concentration on the fruits, vegetables or mushrooms, and
(b) contacting the fruits, vegetables or mushrooms with a second aqueous solution comprising:
   (i) a chelating agent selected from the group consisting of calcium-disodium EDTA, disodium EDTA and a mixture thereof; and
   (ii) an antioxidant selected from the group consisting of sodium erythorbate, ascorbic acid and a mixture thereof,
wherein the second aqueous solution has a pH of about 7.0 to 9.0,
wherein the fruits, vegetables or mushrooms are contacted with the second aqueous solution after being contacted with the first aqueous solution.

### BRIEF DESCRIPTION OF THE DRAWING

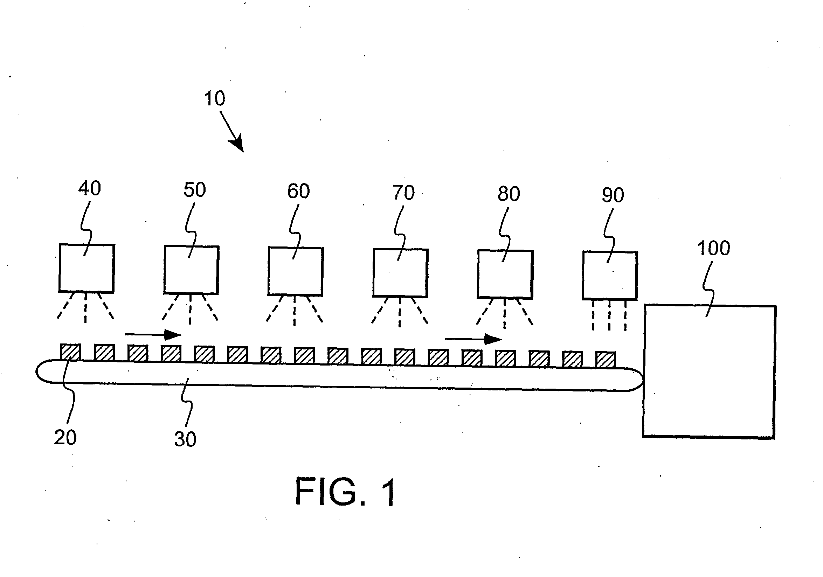

FIG. 1 is a schematic diagram illustrating an exemplary system for conducting a method for preserving mushrooms, in accordance with one aspect.

### DETAILED DESCRIPTION

Treating fruits, vegetables or mushrooms using the inventive methods can extend the shelf-life and substantially maintain the natural texture, flavor and appearance of same. According to one aspect, a method for preserving fruits, vegetables or mushrooms is provided which includes sequentially contacting same with a first aqueous solution to decrease the microbe concentration thereon, and a second aqueous solution to ensure that the fruits, vegetables or mushrooms maintain a desirable appearance after the first aqueous solution treatment. The inventive methods are particularly suitable for use in preserving mushrooms, and can provide mushrooms with an extended shelf-life and a desirable light-colored appearance.

The methods can be used to treat any species of mushroom, for example, white button mushrooms *(agaricus bisporus).* Preferably, the mushrooms to be treated are fresh, i.e., the mushrooms have not been cooked. Whole, unsliced mushrooms can be treated and optionally sliced after treatment. Alternatively, the methods can be used to treat any fruit or vegetable including, for example, oranges, strawberries, clementines or green, yellow or red peppers.

The following discussion refers to the treatment of mushrooms. It will be understood that the described methods can also be used to treat various fruits, vegetables or mixtures thereof.

Initially, the mushrooms can be prewashed by contacting the mushrooms with water. For example, the prewash can be effective to at least partially remove unwanted materials such as debris from the surface of the mushrooms. In such prewash step, the mushrooms can be sprayed with or submerged in water for about 1 second to 5 minutes, more preferably about 5 to 40 seconds. Conventional means for spraying water can be used in the present methods. For example, the water can preferably be ejected at a pressure sufficiently high to provide a thorough washing of the mushrooms, and sufficiently low to avoid damaging the mushrooms. The mushrooms can then be drained to reduce the amount of water thereon, for example, to prevent the mushrooms from absorbing an excessive amount of water. Preferably, the mushrooms can be prewashed with water substantially free of any additive. Alternatively, the mushrooms can be prewashed with water containing an amount of chlorine that is effective to reduce the amount of microbes on the mushrooms.

The mushrooms are contacted with a first aqueous solution. The first aqueous solution includes water and a low pH-adjusting agent for adjusting the pH of the solution to a predetermined level. Advantageously, the first aqueous solution can have a pH level which is effective to reduce the microbial concentration on the mushrooms when the mushrooms are contacted with such solution. For example, the first aqueous solution can have a pH of less than about 7.0, preferably about 1.5 to 4.5, more preferably about 2.0 to 3.0, more preferably about 2.2 to 2.6, and most preferably about 2.4.

Any toxicologically acceptable low pH-adjusting agent which is effective to adjust the pH of the first aqueous solution to the desirable levels set forth above can be used. For example, the first aqueous solution can include citric acid, ascorbic acid, erythorbic acid, acetic acid, lactic acid, malic acid or mixtures thereof. Preferably, the first pH-adjusting agent includes citric acid in light of the relatively low cost thereof.

The first pH-adjusting agent can be present in an amount effective to maintain the pH at, for example, less than about 7.0, preferably about 1.5 to 4.5, more preferably about 2.0 to 3.0, more preferably about 2.2 to 2.6, and most preferably about 2.4. For example, when citric acid is used, the citric acid can be present in an amount from about 0.1 to 22%, more preferably about 1.1 to 7.9% based on the weight of the solution.

The first aqueous solution can contain various optional additives. For example, the first aqueous solution can contain at least one appearance-enhancing agent (e.g., a whitening agent) such as calcium chloride. The calcium chloride can be present in an amount of about 0.01 to 1.0%, more preferably about 0.02 to 0.2%, most preferably about 0.1%, based on the weight of the solution. An antioxidant can also be used such as sodium erythorbate. The sodium erythorbate can be present in an amount of about 0.1 to 5.0%, more preferably about 0.5 to 1.0%, based on the weight of the solution. The first aqueous solution can also optionally contain sodium chloride, for example, in an amount of about 0.1 to 2.0%, more preferably about 0.2 to 0.8%, based on the weight of the solution.

Any means for contacting the mushrooms with the first aqueous solution can be used. Preferably, substantially the entire surface of the mushrooms can be contacted with the first aqueous solution. For example, the first aqueous solution can be sprayed onto the mushrooms, and/or the mushrooms can be submerged in a bath of the first aqueous solution. Conventional means for carrying out such spraying and submerging processes can be used in the present methods.

The mushrooms can be contacted with the first aqueous solution for a time period effective to decrease the microbial concentration on the surface of the mushrooms. The contact time period can depend on, for example, the pH of the solution and the particular contacting method which is used. Generally, if the contact time period is too long, the mushrooms can absorb an excessive amount of water which can adversely affect the texture and/or flavor of the mushrooms. On the other hand, if the contact time period is too short, the first aqueous solution may not be able to provide an adequate degree of antimicrobial action on the mushrooms. Preferably, the contact time period can be about 1 second to 5 minutes, more preferably about 15 to 60 seconds, and most preferably about 30 to 45 seconds.

After contact with the first aqueous solution, the mushrooms can be rinsed with water using any conventional means including, for example, spraying the mushrooms. Such rinsing step can advantageously reduce the overall cost of the process by reducing the amount of the second aqueous solution used in the process. Preferably, the mushrooms can be rinsed for about 5 to 10 seconds. Thereafter, the mushrooms can be drained to remove excess water, for example, for about 5 to 10 seconds. Preferably, the mushrooms can be rinsed with water substantially free of any additive. Alternatively, the mushrooms can be rinsed with water containing an amount of chlorine that is effective to reduce the amount of microbes on the mushrooms.

The mushrooms are contacted with a second aqueous solution after contacting the mushrooms with the first aqueous solution. The second aqueous solution contains at least water, a chelating agent and an antioxidant. The chelating agent is effective to inhibit an enzyme reaction that normally occurs at the surface of the mushrooms over time which can cause the mushrooms to have a dark-colored appearance. The chelating agent can include calcium-disodium ethylenediaminetetraacetic acid (EDTA), disodium EDTA or a mixture thereof. For example, the second aqueous solution can contain the chelating agent in an amount from about 0.01 to 5.0%, preferably about 0.05 to 0.20%.

The antioxidant can be effective to inhibit an oxidation reaction at the surface of mushrooms. For example, the antioxidant can include sodium erythorbate, ascorbic acid or a mixture thereof. The antioxidant can be present in an amount from about 0.1 to 10.0%, preferably 0.5 to 2.0% by weight of the solution.

Since the first aqueous solution can be effective to provide antimicrobial action on the mushrooms, the second aqueous solution is not required to have a high pH value that is sufficient to provide an antimicrobial effect. The second aqueous solution preferably can be effective to raise the pH at the surface of the mushrooms, preferably to about 6.0 to 7.0, more preferably about 6.2 to 6.8, in order to substantially neutralize the pH of the mushrooms. In light of the fact that the appearance and/or flavor of the mushrooms can be adversely affected by contact with a solution having an excessively high pH, the second aqueous solution preferably can have a pH value of about 7.0 to 9.0, more preferably about 7.5 to 8.5, and most preferably about 7.8 to 8.2.

The second aqueous solution can contain water and an optional high pH-adjusting agent for increasing the pH of the second solution to a predetermined level. For example, the high pH-adjusting agent can include sodium bicarbonate, sodium erythorbate, sodium carbonate, sodium citrate, sodium hydroxide, sodium lactate, sodium hypophosphite, sodium acetate, potassium bicarbonate, potassium bicarbonate, potassium carbonate, potassium citrate, potassium hydroxide or mixtures thereof. Preferably, the high-pH adjusting agent can include sodium bicarbonate. For example, the high-pH adjusting agent can be present in the second aqueous solution in an amount from about 0.1 to 5.0%, preferably about 0.5 to 1.5% by weight of the solution.

Any suitable means for contacting the mushrooms with the second aqueous solution can be used. Preferably, substantially the entire surface of the mushrooms can be contacted with the second aqueous solution. For example, the second aqueous solution can be sprayed onto the mushrooms, and/or the mushrooms can be submerged into a bath of the solution. Conventional means for carrying out such spraying and submerging processes can be used in the present methods.

The contact time period between the mushrooms and the second aqueous solution can depend on, for example, the pH of the solution and the particular contacting method which is used. Generally, if the contact time period is too long, the mushrooms can absorb an excessive amount of water which can adversely affect the texture and/or flavor of the mushrooms. On the other hand, if the contact time period is too short, the second aqueous solution may not be able to provide an adequate degree of chelating and/or antioxidizing effect on the mushrooms. Preferably, the contact time period can be about 1 second to about 5 minutes, more preferably about 15 to 60 seconds, and most preferably about 30 to 45 seconds.

The first and second aqueous solutions can be at any temperature which maintains the solutions in liquid phase, preferably about 60 to 120°F. For example, the first aqueous solution can have a temperature of about 80 to 110°F, and the second aqueous solution can have a temperature of about 40 to 100°F. While not wishing to be bound to any particular theory, it is believed that maintaining the first aqueous solution within the above elevated temperature range can result in the improved reduction or removal of bacteria present on the mushrooms.

Preferably, the solutions used in the present methods, particularly the first and second aqueous solutions, can be substantially free of sulfite compounds. As used herein, the term "substantially free of sulfite compounds" means that only trace amounts of sulfite compounds may be present in the solutions.

It has been surprisingly and unexpectedly determined that sequentially contacting the mushrooms with the first and second aqueous solutions can result in mushrooms having a significantly improved appearance, when compared with mushrooms contacted with a low-pH solution but not with the second aqueous solution. For example, contacting the mushrooms with the first aqueous solution without further contacting same with the second aqueous solution can result in the mushrooms having an undesirable dark-colored and/or yellow-colored appearance. By comparison, when mushrooms are sequentially contacted with both the first and second aqueous solutions, the resulting mushrooms can have a significantly improved, light-colored appearance.

While not wishing to be bound by any particular theory, it is believed that a pH imbalance on the surface of the mushrooms resulting from contact with the first aqueous solution can contribute to the dark-colored and/or yellow-colored appearance of the mushrooms. Advantageously, contacting the mushrooms with the second aqueous solution after treatment with the first aqueous solution can be effective to balance, e.g., substantially neutralize, the pH on the surface of the mushrooms. As used herein, the term "substantially neutralize" means that the pH on the surface of the mushrooms is about 6.2 to 7.0. In accordance with one aspect, by balancing the pH, and by using an antioxidant and an enzyme-inhibiting agent, the mushrooms can maintain a desirable light-colored appearance.

The second aqueous solution can optionally contain sodium erythorbate as an appearance-enhancing agent, e.g., a whitening agent, for maintaining the desirable light-colored appearance of the mushrooms. For example, the second aqueous solution can contain sodium erythorbate in an amount from about 0.1 to 10.0%, preferably about 0.5 to 2.0%.

After contacting the mushrooms with the second aqueous solution, the mushrooms can be rinsed with water using any conventional means including, for example, spraying the mushrooms with or submerging the mushrooms in water. Preferably, the mushrooms can be rinsed for about 1 to 10 seconds. Thereafter, the mushrooms can be drained to remove excess water, for example, for about 1 to 10 seconds. Preferably, the rinsing solution can contain water without any additives. Alternatively, the mushrooms can be rinsed with water containing an amount of chlorine that is effective to reduce the amount of microbes on the mushrooms.

After sequentially contacting the mushrooms with the first and second aqueous solutions, the mushrooms can be subjected to an evaporation process wherein excess water can be evaporated from the mushrooms. Any conventional means can be used to carry out the evaporation process including, for example, a blower which blows air over the mushrooms. Preferably, the blower can blow air at about room temperature for about 1 second to about 5 minutes. In addition or as an alternative to using the blower, the mushrooms can be stored for a predetermined amount of time at a reduced temperature. For example, the mushrooms can be stored overnight, and the storage temperature can be about 34 to 40°F. Additionally or alternatively, mushrooms can be dried in a forced-air chamber for about 1 to 30 minutes, or by means of a vacuum-cooling chamber.

The thus-obtained mushrooms can be packaged or further processed. For example, the mushrooms can be processed into smaller pieces by slicing the mushrooms. Additionally or alternatively, the mushrooms can be cooked, dried, frozen, roasted and/or grilled, depending on the desired final product. The whole or sliced mushrooms can then be packaged using conventional means. The packaged mushrooms can be vacuum-cooled and provided as a final product.

The above method for preserving mushrooms can be conducted on a batch or continuous basis, preferably a continuous basis. In a continuous process, for example, mushrooms can be fed onto a continuously moving conveyor belt. The mushrooms can be continuously transported through various sequentially arranged treatment areas wherein the mushrooms are exposed to the various treatments discussed above. The amount of time the mushrooms are subjected to the various treatments can be controlled by, for example, the speed at which the conveyor transports the mushrooms. Preferably, if spraying nozzles are employed, such spraying nozzles are arranged above the conveyor belt and the mushrooms are transported underneath the spraying nozzles.

FIG. 1 illustrates an exemplary system 10 for carrying out the method for preserving mushrooms. The mushrooms 20 can be placed on a conveyor belt 30. The mushrooms 20 can be prewashed with water emitted from at least one prewash spray nozzle 40. Thereafter, the mushrooms can be contacted with the first aqueous solution emitted from at least one first solution spray nozzle 50. The mushrooms 20 can then be rinsed with water emitted from at least one rinse nozzle 60, and then left to drain for a predetermined period of time.

Further downstream, the mushrooms 20 can be contacted with the second aqueous solution emitted from at least one second solution spray nozzle 70. Thereafter, the mushrooms 20 can be conveyed to at least one rinse nozzle 80 to be rinsed with water, and then left to drain for a predetermined period of time. The mushrooms 20 can then be transported to a blower 90 that blows air over the mushrooms 20 to evaporate excess water. The mushrooms 20 can then be conveyed to a storage area 100. At least one controller (not shown) for controlling the various parameters of the apparatuses such as conveyor belt speeds, flow rates, pressures and temperatures, can be used with the system 10.

The following are examples of the methods described above, and the present invention should not be construed as being limited to such examples.

### EXAMPLES

### Example 1: Measuring Aerobic Plate Count, Coloration and Shelf Life of Sprayed and Subsequently Sliced Mushrooms

Fresh, whole inbetweener mushrooms, i.e., mushrooms harvested between first flush and second flush, were obtained by a conventional mushroom growing process.

Some of the mushrooms were left untreated and sliced. Other mushrooms were treated by a comparative process, and still other mushrooms were treated by an exemplary process. Mushrooms that were left untreated are referred to as comparative Sample 1-1. Mushrooms treated using the comparative process are referred to as comparative Sample 1-2, and mushrooms treated in accordance with the exemplary process are referred to as Sample 1-3.

In the comparative and exemplary processes used to treat Samples 1-2 and 1-3, fresh, whole mushrooms were prewashed by spraying water thereon for 25 seconds. The mushrooms were then sprayed with a first aqueous solution for 45 seconds at 80°F. Samples 1-2 and 1-3 used different first aqueous solutions, and the contents and pH values thereof are set forth in the following Table 1.

**Table 1:**

| First Aqueous Solutions Used to Treat Samples 1-2 and 1-3 | | |
|---|---|---|
| | Sample 1-2 (comparative) | Sample 1-3 |
| pH | 10.6 | 2.4 |
| Contents | water | Water |
| | 0.2 wt. % sodium hydroxide | 3 wt. % citric acid |
| | 0.42 wt. % sodium bicarbonate | 0.1 wt. % calcium chloride |
| | | 0.4 wt. % sodium chloride |
| | | 0.8 wt. % sodium erythorbate |

The mushrooms were then sprayed with a second aqueous solution for 45 seconds. Samples 1-2 and 1-3 used different second aqueous solutions, and the contents and pH thereof are set forth in the following Table 2.

**Table 2:**

| Second Aqueous Solutions Used to Treat Samples 1-2 and 1-3 | | |
|---|---|---|
| | Sample 1-2 (comparative) | Sample 1-3 |
| pH | 4.6 | 8.0 |
| Contents | water | Water |
| | 0.6 wt. % erythorbic acid | 1 wt. % sodium bicarbonate |
| | 2.4 wt. % sodium erythorbate | 1 wt. % sodium erythorbate |
| | 0.1 wt. % calcium-disodium EDTA | 0.1 wt. % calcium-disodium EDTA |
| | 0.1 wt. % calcium chloride | |

The mushrooms were then rinsed with water for 3 seconds, and subjected to an evaporation process in which a blower directed air over the mushrooms for 5 seconds. The mushrooms were then stored overnight at 36°F, and sliced and packed. The packed, sliced mushrooms were vacuum cooled, and samples were collected and stored at 40°F and 50°F for evaluation.

The aerobic plate count for each of Samples 1-1, 1-2 and 1-3 was measured during storage of the mushrooms at 40°F, and after specified storage periods. Such measurements were obtained using the AOAC Official Method 966.23 for Aerobic Plate Count. The following Table 3 sets forth the aerobic plate counts of Samples 1-1, 1-2 and 1-3. The storage time of 0 days represents measurements taken substantially immediately after treatment (or the initial aerobic plate count for Sample 1-1), and the storage time of 1 day represents measurements taken after the overnight storage and packing.

**Table 3:**

| Aerobic Plate Counts of Samples 1-1, 1-2 and 1-3 | | | |
|---|---|---|---|
| Storage Time, days | Sample 1-1 (comparative), million cfu/g | Sample 1-2 (comparative), million cfu/g | Sample 1-3, million cfu/g |
| 0 | 51 | 12 | 6.5 |
| 1 | 162 | 14 | 6.0 |
| 3 | 187 | 63 | 14 |
| 7 | 1640 | 570 | 120 |

As can be seen from Table 3, Sample 1-3 showed a reduced aerobic plate count at 0, 1, 3 and 7 days of storage, in comparison with comparative Samples 1-1 and 1-2.

The color of Samples 1-1, 1-2 and 1-3 was evaluated during storage of the mushrooms at 40°F, and at specified storage periods. In particular, the color of the mushrooms was evaluated to obtain L and L/b values, using Minolta CR-200 Chroma Meter (colorimeter). L values are commonly used to quantify the color of mushrooms. L/b values can also be used to quantify the color of mushrooms. A higher L or L/b value indicates a whiter mushroom. Table 4 sets forth the L and L/b values of Samples 1-1, 1-2 and 1-3.

**Table 4:**

| Color Evaluation of Samples 1-1, 1-2 and 1-3 | | | | | | |
|---|---|---|---|---|---|---|
| Storage Time (days) | Sample 1-1 (comparative) | | Sample 1-2 (comparative) | | Sample 1-3 | |
| | L | L/b | L | L/b | L | L/b |
| 0 | 86.22 | 5.37 | 86.69 | 5.27 | 87.71 | 5.39 |
| 8 | 77.43 | 4.05 | 78.45 | 4.51 | 87.55 | 5.11 |
| 10 | 71.36 | 3.86 | 80.60 | 4.34 | 87.70 | 5.08 |

As can be seen from Table 4, Sample 1-3 showed improved color characteristics in view of the higher L and L/b values at 0, 8 and 10 days of storage, in comparison with comparative Samples 1-1 and 1-2.

The shelf life of each of Samples 1-1, 1-2 and 1-3 was measured at two temperatures, 40°F and 50°F. For purposes of the examples, the shelf life of the mushrooms was considered to be expired when it was estimated that about 2.5% or more of the surface of the mushrooms was discolored. Table 5 sets forth the shelf life of Samples 1-1, 1-2 and 1-3 at 40°F and 50°F.

**Table 5:**

| Shelf Life of Samples 1-1, 1-2 and 1-3 | | | |
|---|---|---|---|
| Storage Temperature, °F | Sample 1-1 (comparative), days | Sample 1-2 (comparative), days | Sample 1-3, days |
| 50 | 3 | 4 | 6 |
| 40 | 4 | 7 | 10 |

As can be seen from Table 5, Sample 1-3 provided mushrooms with increased shelf life at 40°F and 50°F, in comparison with comparative Samples 1-1 and 1-2.

### Example 2: Measuring Aerobic Plate Count, Coloration and Shelf Life of Sprayed and Subsequently Unsliced Mushrooms

First flush, button mushrooms were grown and harvested under conventional growth conditions. Excess dirt on the mushrooms was not removed prior to treatment.

In this example, mushrooms were left untreated, and are referred to as comparative Sample 2-1. In addition, mushrooms were treated in the same manner as comparative Sample 1-2 described in Example 1 above, except that the mushrooms were not sliced after overnight storage. These mushrooms are referred to below as comparative Sample 2-2. Further, mushrooms were treated in the same manner as Sample 1-3 described in Example 1 above, except that the mushrooms were not sliced after overnight storage. These mushrooms are referred to below as Sample 2-3.

The aerobic plate count for each of Samples 2-1, 2-2 and 2-3 was measured in the manner discussed in Example 1. The following Table 6 sets forth the results of such measurements.

**Table 6:**

| Aerobic Plate Counts of Samples 2-1, 2-2 and 2-3 | | | |
|---|---|---|---|
| Storage Time, days | Sample 2-1 (comparative), million cfu/g | Sample 2-2 (comparative), million cfu/g | Sample 2-3, million cfu/g |
| 0 | 8.4 | 3.8 | 1.3 |
| 1 | 11.3 | 3.5 | 0.9 |
| 3 | 71.5 | 21.7 | 3.1 |
| 7 | 1010 | 1910 | 150 |

As can be seen from Table 6, Sample 2-3 showed a decreased aerobic plate count at 0, 1, 3, 7 days of storage, in comparison with comparative Samples 2-1 and 2-2.

The color of Samples 2-1, 2-2 and 2-3 was measured in the manner discussed in Example 1, except that a measurement was taken at 14 days of storage instead of 10 days. The following Table 7 sets forth the results of such measurements.

**Table 7:**

| Color Evaluation of Samples 2-1, 2-2 and 2-3 | | | | | | |
|---|---|---|---|---|---|---|
| Storage Time, days | Sample 2-1 (comparative) | | Sample 2-2 (comparative) | | Sample 2-3 | |
| | L | L/b | L | L/b | L | L/b |
| 0 | 92.41 | 5.36 | 91.66 | 5.42 | 91.33 | 5.30 |
| 8 | 88.07 | 4.31 | 82.33 | 4.32 | 90.09 | 5.32 |
| 14 | 81.37 | 3.20 | 74.11 | 3.43 | 86.64 | 4.48 |

As can be seen from Table 7, Sample 2-3 showed improved coloration after 8 and 14 days of storage, in comparison with comparative Samples 2-1 and 2-2.

The shelf life of each of Samples 2-1, 2-2 and 2-3 was measured in the manner described in Example 1, and Table 8 sets forth the results of such measurements.

**Table 8:**

| Shelf Life of Samples 2-1, 2-2 and 2-3 | | | |
|---|---|---|---|
| Storage Temperature, °F | Sample 2-1 (comparative), days | Sample 2-2 (comparative), days | Sample 2-3, days |
| 50 | 5 | 4 | 6 |
| 40 | 6 | 6 | 12 |

As can be seen from Table 8, Sample 2-3 showed an increased shelf life at 40°F and 50°F, in comparison with comparative Samples 2-1 and 2-2.

### Example 3: Measuring Aerobic Plate Count, Coloration and Shelf Life of Submerged and Subsequently Sliced Mushrooms

Fresh, whole inbetweener mushrooms were obtained by a conventional growth process. Some of the mushrooms were left untreated and sliced. Others mushrooms were treated by a comparative process, and still other mushrooms were treated by an exemplary process. Mushrooms that were left untreated are referred to as comparative Sample 3-1. Mushrooms treated using the comparative process are referred to as comparative Sample 3-2, and mushrooms treated in accordance with the exemplary process are referred to as Sample 3-3.

In the preparation of Samples 3-2 and 3-3, fresh, whole mushrooms were prewashed by submerging same into water for 10 seconds with gentle and constant stirring. The mushrooms were then drained for 5 seconds. The mushrooms were subsequently submerged in a first aqueous solution for 45 seconds at 80°F, and then drained for 5 seconds. Samples 3-2 and 3-3 were treated with the same first aqueous solutions as Samples 1-2 and 1-3, respectively, as set forth in Table 1. Thereafter, the mushrooms were submerged in the water for 10 seconds and then drained for 5 seconds.

The mushrooms were then submerged in a second aqueous solution for 45 seconds and drained for 5 seconds. Samples 3-2 and 3-3 were treated with the same second aqueous solutions as Samples 1-2 and 1-3, respectively, as set forth in Table 2.

The mushrooms were then submerged in water for 10 seconds and drained for 5 seconds. The mushrooms were stored overnight at 40°F, then sliced and packed by hand. The packed, sliced mushrooms were stored at 40°F and 50°F and samples were taken for evaluation.

The aerobic plate count for each of Samples 3-1, 3-2 and 3-3 was measured at 40°F and at specified storage times in the same manner described in Example 1. The following Table 9 sets forth the results of such measurements.

**Table 9:**

| Aerobic Plate Counts of Samples 3-1, 3-2 and 3-3 | | | |
|---|---|---|---|
| Storage Time, days | Sample 3-1 (comparative), million cfu/g | Sample 3-2 (comparative), million cfu/g | Sample 3-3, million cfu/g |
| 0 | 12.1 | 2.4 | 1.6 |
| 1 | 19.8 | 10.5 | 0.6 |
| 3 | 187 | 62.5 | 3.9 |
| 7 | 1640 | 1010 | 120 |

As can be seen from Table 9, Sample 3-3 exhibited a reduced aerobic plate count at 0, 1, 3, and 7 days after storage, in comparison with comparative Samples 3-1 and 3-2.

The color of each of Samples 3-1, 3-2 and 3-3 was measured in the manner described in Example 1, except that measurements were taken after 2 and 13 days of storage instead of 0 and 10 days, respectively. Table 10 sets forth the results of such measurements.

**Table 10:**

| Color Evaluation of Samples 3-1, 3-2 and 3-3 | | | | | | |
|---|---|---|---|---|---|---|
| Storage Time, days | Sample 3-1 (comparative) | | Sample 3-2 (comparative) | | Sample 3-3 | |
| | L | L/b | L | L/b | L | L/b |
| 2 | 86.11 | 5.41 | 88.84 | 5.79 | 86.85 | 5.20 |
| 8 | 82.09 | 4.30 | 79.56 | 4.31 | 82.83 | 5.07 |
| 13 | 76.05 | 3.21 | 81.08 | 4.19 | 83.96 | 4.55 |

As can be seen from Table 10, Sample 3-3 showed improved color characteristics at 8 and 13 days after treatment, in comparison with comparative Samples 3-1 and 3-2.

The shelf life of each of Samples 3-1, 3-2 and 3-3 was measured at 40°F and 50°F in the same manner as set forth in Example 1, and Table 11 sets forth the measurements.

**Table 11:**

| Shelf Life of Samples 3-1, 3-2 and 3-3 | | | |
|---|---|---|---|
| Storage Temperature, °F | Sample 3-1 (comparative), days | Sample 3-2 (comparative), days | Sample 3-3, days |
| 50 | 5 | 5 | 6 |
| 40 | 7 | 10 | 16 |

As can be seen from Table 11, Sample 3-3 provided mushrooms with increased shelf life at 40°F and 50°F in comparison with comparative Samples 3-1 and 3-2.

### Example 4: Measuring Aerobic Plate Count, Coloration and Shelf Life of Submerged and Subsequently Unsliced Mushrooms

First flush, button mushrooms were grown and harvested using a conventional growing process. Excess dirt on the mushrooms was not removed prior to treatment.

In this example, mushrooms were left untreated, and are referred to as comparative Sample 4-1. In addition, mushrooms were treated in the same manner as comparative Sample 3-2 described in Example 3 above, except that the mushrooms were not sliced after overnight storage. These mushrooms are referred to below as comparative Sample 4-2. Further, mushrooms were treated in the same manner as Sample 3-3 described in Example 3 above, except that the mushrooms were not sliced after overnight storage. These mushrooms are referred to below as Sample 4-3.

The aerobic plate count for each of Samples 4-1, 4-2 and 4-3 was measured in the same manner described in Example 1, and the following Table 12 sets forth the results of such measurements.

**Table 12:**

| Aerobic Plate Counts of Samples 4-1, 4-2 and 4-3 | | | |
|---|---|---|---|
| Storage Time, days | Sample 4-1 (comparative), million cfu/g | Sample 4-2 (comparative), million cfu/g | Sample 4-3, million cfu/g |
| 0 | 8.4 | 3.8 | 1.3 |
| 1 | 11.3 | 3.5 | 0.9 |
| 3 | 71.5 | 21.7 | 3.1 |
| 7 | 1010 | 1910 | 150 |

As can be seen from Table 12, Sample 4-3 exhibited a reduced aerobic plate count at 0, 1, 3, and 7 days after storage, in comparison with comparative Samples 4-1 and 4-2.

The color of each of Samples 4-1, 4-2 and 4-3 was evaluated in the same manner as described in Example 1, except that measurements were taken at 2 and 13 days of storage, instead of 0 and 10 days, respectively. The following Table 13 sets forth the results of such evaluation.

**Table 13:**

| Color Evaluation of Samples 4-1, 4-2 and 4-3 | | | | | | |
|---|---|---|---|---|---|---|
| Storage Time, days | Sample 4-1 (comparative) | | Sample 4-2 (comparative) | | Sample 4-3 | |
| | L | L/b | L | L/b | L | L/b |
| 2 | 90.11 | 4.70 | 90.97 | 5.01 | 90.06 | 4.99 |
| 8 | 85.72 | 3.91 | 86.02 | 3.59 | 89.54 | 4.56 |
| 13 | 80.57 | 2.97 | 77.58 | 3.26 | 86.49 | 4.31 |

As can be seen from Table 13, Sample 4-3 showed improved color characteristics at 8 and 13 days of storage in comparison with comparative Samples 4-1 and 4-2.

The shelf life of each of Samples 4-1, 4-2 and 4-3 was measured at 40°F and 50°F in the manner described in Example 1, and Table 14 sets forth such measurements.

**Table 14:**

| Shelf Life of Samples 4-1, 4-2 and 4-3 | | | |
|---|---|---|---|
| Storage Temperature, °F | Sample 4-1 (comparative), days | Sample 4-2, (comparative) days | Sample 4-3, days |
| 50 | 5 | 4 | 6 |
| 40 | 7 | 7 | 14 |

As can be seen from Table 14, Sample 4-3 provided mushrooms with increased shelf life at 40°F and 50°F in comparison with comparative Samples 4-1 and 4-2.

While the invention has been described in detail with reference to specific embodiments thereof, it will be apparent to one skilled in the art that various changes and modifications can be made and equivalents employed without departing from the scope of the claims.

## Claims

1. Method for preserving fruits, vegetables or mushrooms, comprising:
(a) contacting the fruits, vegetables or mushrooms with a first aqueous solution comprising a pH-adjusting agent effective to adjust the pH of the first aqueous solution to about 1.5 to 4.5, wherein the contact between the fruits, vegetables or mushrooms and the first aqueous solution is effective to reduce a microbial concentration on the fruits, vegetables or mushrooms, and
(b) contacting the fruits, vegetables or mushrooms with a second aqueous solution comprising a chelating agent and an antioxidant, wherein the second aqueous solution has a pH of about 7.0 to 9.0,
wherein the fruits, vegetables or mushrooms are contacted with the second aqueous solution after being contacted with the first aqueous solution.

2. Method for preserving fruits, vegetables or mushrooms according to claim 1, wherein the fruits, vegetables or mushrooms are mushrooms.

3. Method for preserving mushrooms according to claim 2, wherein the mushrooms are whole mushrooms, sliced mushrooms or mixtures thereof.

4. Method for preserving fruits, vegetables or mushrooms according to any preceding claim, wherein the fruits, vegetables or mushrooms are rinsed with water before contacting the fruits, vegetables or mushrooms with the first aqueous solution.

5. Method for preserving fruits, vegetables or mushrooms according to any preceding claim, wherein the first aqueous solution has a pH of about 2.0 to 3.0.

6. Method for preserving fruits, vegetables or mushrooms according to claim 5, wherein the first aqueous solution has a pH of about 2.2 to 2.6.

7. Method for preserving fruits, vegetables or mushrooms according to any preceding claim, wherein the pH-adjusting agent comprises citric acid, ascorbic acid, erythorbic acid, acetic acid, lactic acid, malic acid or mixtures thereof.

8. Method for preserving fruits, vegetables or mushrooms according to claim 7, wherein the pH-adjusting agent comprises citric acid.

9. Method for preserving fruits, vegetables or mushrooms according to any preceding claim, wherein the first aqueous solution comprises sodium chloride in an amount of about 0.1 to 2.0% by weight.

10. Method for preserving fruits, vegetables or mushrooms according to any of claims 1 to 8, wherein the first aqueous solution comprises sodium erythorbate in an amount of about 0.1 to 5.0% by weight.

11. Method for preserving fruits, vegetables or mushrooms according to any preceding claim, wherein the fruits, vegetables or mushrooms are contacted with the first aqueous solution for about 1 second to 5 minutes.

12. Method for preserving fruits, vegetables or mushrooms according to claim 11, wherein the fruits, vegetables or mushrooms are contacted with the first aqueous solution for about 15 to 60 seconds.

13. Method for preserving fruits, vegetables or mushrooms according to claim 12, wherein the fruits, vegetables or mushrooms are contacted with the first aqueous solution for about 30 to 45 seconds.

14. Method for preserving fruits, vegetables or mushrooms according to any preceding claim, wherein the fruits, vegetables or mushrooms are rinsed with water after step (a) and before step (b), and wherein the fruits, vegetables or mushrooms are rinsed with water after step (b).

15. Method for preserving fruits, vegetables or mushrooms according to any preceding claim, wherein the second aqueous solution comprises a high-pH adjusting agent comprising sodium bicarbonate, sodium erythorbate, sodium carbonate, sodium citrate, sodium hydroxide, sodium lactate, sodium hypophosphite, sodium acetate, potassium bicarbonate, potassium bicarbonate, potassium carbonate, potassium citrate, potassium hydroxide or mixtures thereof.

16. Method for preserving fruits, vegetables or mushrooms according to claim 15, wherein the second aqueous solution comprises sodium bicarbonate in an amount of about 0.1 to 5.0% by weight.

17. Method for preserving fruits, vegetables or mushrooms according to any preceding claim, wherein the antioxidant comprises sodium erythorbate, ascorbic acid or mixtures thereof.

18. Method for preserving fruits, vegetables or mushrooms according to any preceding claim, wherein the antioxidant is present in an amount of about 0.1 to 10.0% by weight.

19. Method for preserving fruits, vegetables or mushrooms according to any preceding claim, wherein the chelating agent comprises calcium-disodium EDTA, disodium EDTA or mixtures thereof.

20. Method for preserving fruits, vegetables or mushrooms according to any preceding claim, wherein the chelating agent is present in an amount of about 0.01 to 5.0% by weight.

21. Method for preserving fruits, vegetables or mushrooms according to any preceding claim, wherein the fruits, vegetables or mushrooms are contacted with the second aqueous solution for about 1 second to 5 minutes.

22. Method for preserving fruits, vegetables or mushrooms according to claim 21, wherein the fruits, vegetables or mushrooms are contacted with the second aqueous solution for about 15 to 60 seconds.

23. Method for preserving fruits, vegetables or mushrooms according to claim 22, wherein the fruits, vegetables or mushrooms are contacted with the second aqueous solution for about 30 to 45 seconds.

24. Method for preserving fruits, vegetables or mushrooms according to any preceding claim, wherein the second aqueous solution has a pH of about 7.5 to 8.5.

25. Method for preserving fruits, vegetables or mushrooms according to claim 24, wherein the second aqueous solution has a pH of about 7.8 to 8.2.

26. Method for preserving fruits, vegetables or mushrooms according to any preceding claim, further comprising:
(c) blowing air over the fruits, vegetables or mushrooms to evaporate an amount of water present on the fruits, vegetables or mushrooms, wherein step (c) is conducted after step (b).

27. Method for preserving fruits, vegetables or mushrooms according to any preceding claim, wherein the step (b) is effective to raise the pH at the surface of the fruits, vegetables or mushrooms to a substantially neutral pH value.

28. Method for preserving fruits, vegetables or mushrooms according to any preceding claim, wherein the fruits, vegetables or mushrooms are not contacted with an aqueous solution having a pH greater than 7.0 prior to the step (a).

29. Method for preserving fruits, vegetables or mushrooms according to claim 1, wherein the chelating agent is selected from the group consisting of calcium-disodium EDTA, disodium EDTA and a mixture thereof; and the antioxidant is selected from the group consisting of sodium erythorbate, ascorbic acid and a mixture thereof.

30. Method for preserving fruits, vegetables or mushrooms according to claim 29, wherein the fruits, vegetables or mushrooms are not contacted with an aqueous solution having a pH greater than 7.0 prior to the step (a).

31. Method for preserving fruits, vegetables or mushrooms according to claim 29 or 30, wherein the pH of the first aqueous solution is about 2.2 to 2.6, and the pH of the second aqueous solution is about 7.8 to 8.2.
